# EUROPEAN PATENT APPLICATION

(11) **EP 4 641 933 A1**
(43) Date of publication of application: **29.10.2025**
(21) Application number: 25169403.0
(22) Date of filing: 09.04.2025
(51) Int. Cl.: H04B 1/00, H04W 52/02

(54) **VARIABLE DYNAMIC RANGE WIRELESS RECEIVER**

(30) Priority: 22.04.2024 US 202463636969 P; 31.10.2024 US 202418933836
(71) Applicant: Avago Technologies International Sales Pte. Limited, Singapore 768923 (SG)
(72) Inventor: Forbes, Marcellus Donald, Irvine, CA, 92618 (US)
(74) Representative: Grünecker Patent- und Rechtsanwälte PartG mbB

(57) **Abstract**

The systems and methods for conserving energy by managing variable dynamic range of a receiver device are presented. The system can include a receiver configured to receive wireless transmissions at any of a plurality of amplitude ranges. The receiver can include a processor to operate, for a listening mode of the receiver, at a reduced amplitude range of the plurality of amplitude ranges for which to listen for a preamble of a data frame of a wireless transmission. The reduced amplitude range can have a reduced power level below a threshold. The processor can receive, while operating at the reduced amplitude range, the preamble of the data frame. The processor can switch, for a receiving mode, responsive to receiving the preamble, to an increased amplitude range to receive the data frame, the increased amplitude range operating at an increased linearity or power level above the threshold.

## Description

### Cross-Reference to Related Patent Applications

This application claims the benefit of and priority to a U.S. Provisional Application No. 63/636,969, filed April 22, 2024, which is incorporated herein by reference in its entirety.

### Field of the Disclosure

This disclosure generally relates to systems and methods for reducing power consumption of a wireless receiver device, including by and not limited to reducing power consumption of the receiver by dynamically adjusting the dynamic range during listening and receiving modes.

### Background of the Disclosure

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, Zigbee and others. Using such technologies, wireless communication devices can communicate their transmissions over radio frequencies and across various spaces and ranges.

### Summary

The technical solutions of the present disclosure allow receiver devices to conserve energy by managing their variable dynamic range (VDR) while operating in a listening mode. By adjusting the VDR based on the operational mode, the receiver can minimize power consumption during periods of low activity and improve the receiver sensitivity (e.g., receiver dynamic range and performance) in time for data reception. This approach can improve the energy efficiency of the wireless receivers in technologies such as Wi-Fi, Bluetooth Low Energy, and Zigbee, in which the receivers can detect preambles even with a reduced dynamic range. By operating with a reduced dynamic range during listening mode, the receiver's circuitry can reduce the amount of power consumed due to the reduced demands on the receiver circuitry components. This allows the receiver to conserve energy during listening modes by operating at a lower VDR and utilizing its full available VDR when suitable for data frame processing.

An aspect of the technical solutions is directed to a system. The system can include a receiver configured to receive wireless transmissions having a plurality of amplitude ranges at a plurality of corresponding power levels. The receiver can include one or more processors. The one or more processors can be configured to operate, for a listening mode of the receiver, at a reduced amplitude range of the plurality of amplitude ranges for which to listen for a preamble of a data frame of a wireless transmission, the reduced amplitude range corresponding to a reduced power level below a power threshold. The one or more processors can be configured to receive, while operating at the reduced amplitude range, the preamble of the data frame. The one or more processors can be configured to switch, for a receiving mode of the receiver responsive to receiving the preamble of the data frame, to an increased amplitude range to receive the data frame, the increased amplitude range operating at an increased power level above the power threshold.

The one or more processors can be configured to operate, for the listening mode, at the reduced amplitude range of a first analog to digital converter (ADC) of the receiver, the first ADC having a reduced amplitude range not exceeding an amplitude range threshold. The one or more processors can be configured to switch, for the receiving mode, to the increased amplitude range of a second ADC of the receiver, the second ADC having an increased amplitude range that exceeding the amplitude range threshold.

The receiver can include an analog-to-digital converter (ADC) configured to operate, during the listening mode, at the reduced power level, the reduced power level established based on at least on one of a portion of an overall variable dynamic range of the ADC. The receiver can include one or more phase-locked loops (PLL) and one or more local oscillator generators (LOGENs), the one or more PLLs and the one or more the LOGENs configured to operate at a first current level corresponding to a first noise level during the listening mode and at a second current level corresponding to a second noise level during the receiving mode. The first current level can be lower than the second current level to conserve the energy and the first noise level can be higher than the second noise level.

The receiver includes a low noise amplifier (LNA) that is configured to adjust a supply voltage based on a selected amplitude range of the plurality of amplitude ranges. The LNA can operate at a first voltage level during the listening mode and at a second voltage level during the receiving mode. The first voltage level can be lower than the second voltage level.

6. The system of claim 1, further comprising a baseband processor configured to adjust a headroom voltage between a first voltage level to be used during the listening mode and a second voltage level to be used during the receiving mode, the first voltage level lower than the second voltage level to conserve energy of the receiver during the listening mode.

The reduced amplitude range can correspond to first operating point of a variable dynamic range of the receiver. The one or more processors can be configured to select the first operating point based the reduced power level to conserve energy of the receiver during the listening mode. The increased amplitude range can be adjusted for a signal strength of the data frame based on one or more measurements of a signal of the preamble. The receiver can include an automatic gain controller (AGC) to adjust at least one of the reduced amplitude range or the increased amplitude range based on one or more conditions of the wireless transmissions.

The receiver can be configured to switch between the listening mode and the receiving mode within a predefined time window upon detecting the preamble. The preamble and the data frame can be a part of a communication protocol comprising at least one of a Wi-Fi technology, a Bluetooth technology or a Zigbee technology. The one or more processors can be configured to adjust the increased power level based on historical data of signal strength for a plurality of data frames received by the receiver.

An aspect of the technical solutions is directed to a method. The method can include operating, by one or more processors for a listening mode of a receiver configured to receive wireless transmissions having a plurality of amplitude ranges at a plurality of corresponding power levels, at a reduced amplitude range of the plurality of amplitude ranges for which to listen for a preamble of a data frame of a wireless transmission. The reduced amplitude range can correspond to a reduced power level below a power threshold. The method can include receiving, by the one or more processors while operating at the reduced amplitude range, the preamble of the data frame. The method can include switching, by the one or more processors for a receiving mode of the receiver responsive to receiving the preamble of the data frame, to an increased amplitude range to receive the data frame. The increased amplitude range can operate at an increased power level above the power threshold.

The method can include operating, by the one or more processors for the listening mode, at the reduced amplitude range of a first analog to digital converter (ADC) of the receiver, the first ADC having a reduced amplitude range not exceeding an amplitude range threshold. The method can include switching, by the one or more processors for the receiving mode, to the increased amplitude range of a second ADC of the receiver, the second ADC having an increased amplitude range that exceeding the amplitude range threshold.

The method can include operating, by an analog-to-digital converter (ADC) of the receiver, during the listening mode, at the reduced power level, the reduced power level established based on at least on one of a portion of an overall variable dynamic range of the ADC. The method can include operating, by one or more phase-locked loops (PLL) and one or more local oscillator generators (LOGENs) of the receiver, at a first current level corresponding to a first noise level during the listening mode and at a second current level corresponding to a second noise level during the receiving mode, wherein the first current level is lower than the second current level to conserve the energy and the first noise level is higher than the second noise level.

The method can include adjusting, by a low noise amplifier (LNA) of the receiver, a supply voltage based on a selected amplitude range of the plurality of amplitude ranges, wherein the LNA operates at a first voltage level during the listening mode and at a second voltage level during the receiving mode, the first voltage level being lower than the second voltage level. The method can include adjusting, by a baseband processor of the receiver, a headroom voltage between a first voltage level to be used during the listening mode and a second voltage level to be used during the receiving mode, the first voltage level lower than the second voltage level to conserve energy of the receiver during the listening mode. The reduced amplitude range can correspond to first operating point of a variable dynamic range of the receiver, the one or more processors configured to select the first operating point based the reduced power level to conserve energy of the receiver during the listening mode.

An aspect of the technical solutions is directed to a non-transitory computer-readable medium storing instructions. The instructions, when executed by at least one processor of a receiver configured to receive wireless transmissions having a plurality of amplitude ranges at a plurality of corresponding power levels, can cause the at least one processor to operate, for a listening mode of the receiver, at a reduced amplitude range of the plurality of amplitude ranges for which to listen for a preamble of a data frame of a wireless transmission. The reduced amplitude range can correspond to a reduced power level below a power threshold. The instructions can cause the at least one processor to receive, while operating at the reduced amplitude range, the preamble of the data frame. The instructions can cause the at least one processor to switch, for a receiving mode of the receiver responsive to receiving the preamble of the data frame, to an increased amplitude range to receive the data frame. The increased amplitude range can operate at an increased power level above the power threshold.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2A illustrates an example system for conserving energy by managing variable dynamic range of a receiver device.
FIG. 2B illustrates an example transceiver for managing the variable dynamic range at the receiver device.
FIGs. 3A and 3B are diagrams of charts showing the comparison of traditions receivers to the dynamic range receiver of the present solution.
FIG. 3C is a diagram or table of an example embodiments of power that may be saved in different scenarios.
FIG. 4A is a diagram of a chart illustrating another embodiment of the present solution.
FIG. 4B is a diagram of a chart illustrating another embodiment of using separate knobs for gain and dynamic range control.
FIG. 5 illustrates an example flow chart of a method for conserving energy by managing variable dynamic range of a receiver device.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of a variable dynamic range receiver of the present solution.

### A. Computing and Network Environment

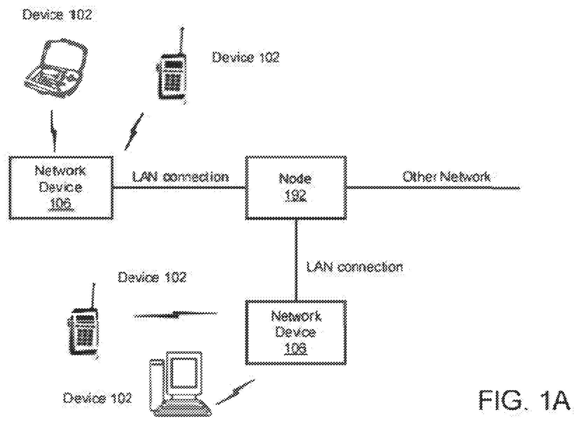

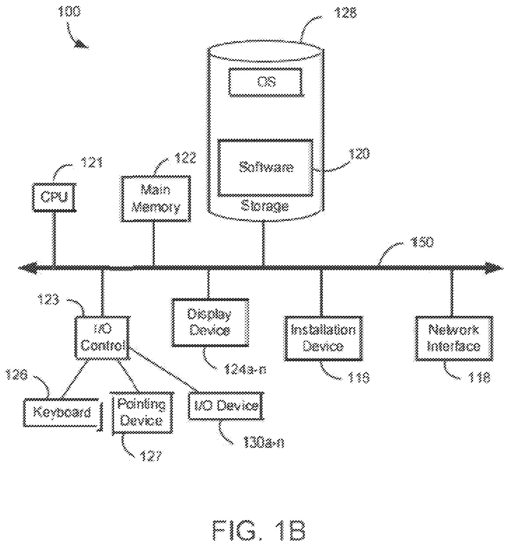

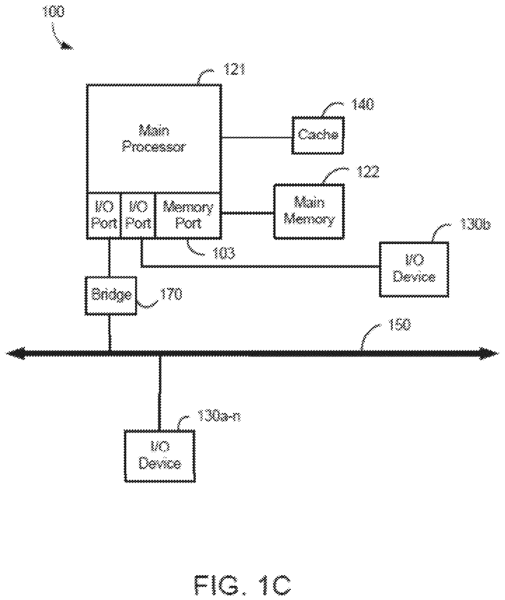

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Variable Dynamic Range Receiver

As in some other modern networking technologies, IEEE 802.11 (Wi-Fi) Wireless Local Area (WLAN) networking technology can organize the data to be sent into discrete packets which can be sent from one transceiver to another. Since the RF spectrum can be shared among different transceivers (e.g., potentially hundreds of transceivers in a local area) the use of the spectrum can be coordinated to avoid collisions between competing transmitter-receiver pairs. The 802.11 standard can define several ways of coordinating the use of the shared Radio Frequency (RF) spectrum. One of the coordination techniques can include the Distributed Coordination Function (DCF), in which Wi-Fi devices can operate their radio receivers in the listen mode waiting to receiver or "hear" transmissions from another Wi-Fi devices. In the listen mode, the RF power in the channel can be sensed (e.g., the energy detect) as well as the specific waveforms of the Wi-Fi packet preamble (e.g., the carrier sense). This sensing can be done to determine that a Wi-Fi packet is present on the air so that it is received. The sensing can also be done to determine when the channel is occupied, either by a Wi-Fi transmission or any other radio technology (such as Bluetooth) which can interfere with the desired transmission. A Wi-Fi transceiver that wishes to send data can wait until the RF channel (the medium) is clear (has no detectable packets and RF energy below a threshold) before transmitting. This means that a Wi-Fi transceiver can spend most of its time in the listen mode. This can particularly occur when the Wi-Fi function is transmitting or receiving little data relative to its total capacity, since all the time that the transceiver is not actively transmitting or receiving a packet it can be operating in the listen mode. Therefore, reducing the power consumption of the listen mode can have a major impact on the energy consumption of the Wi-Fi functionality on an energy constrained device, such as a mobile phone.

The technical solutions can include a variable dynamic range (VDR) receiver that can reduce the power consumed in the listen and receive (Rx) modes by adding new, reduced power, lowering the Dynamic Range (DR) and operating points to the radio. The dynamic range of a receiver can be the difference between the receiver's internal noise power (e.g., the receiver's cascaded noise figure) and the maximum signal level that can be received without distortion.

As with some other radio technologies, a receiving device, such as a Wi-Fi device, can be configured to receive packets over a very wide range of RF power levels. For example, the 802.11 standard mandates that a receiver be able to receiver packets at conducted power levels from -80 dBm to -4 dBm or 10 pW to 398 µW, however many commonly available receivers can successfully receive packets as weak as -100 dBm or 100 fW. In addition, the modern 802.11 standard support packet types that can be transmitted with modulations requiring SNRs from 0 dB to almost 40 dB. Furthermore these packets can have peak to average power ratios (PARs) of over 12 dB. Leaving some margin for fading and gain error can mean that a modern Wi-Fi receiver's DR may exceed 60 dB. Despite the DR being very wide, it can still be smaller than the 96 dB range of packet RF power levels over which the receiver operates necessitating an Automatic Gain Control (AGC) circuit. At the start of a packet, during the first portion of the preamble, the AGC moves the DR window to an appropriate operating point for the packet power observed.

As wireless local area network (WLAN) transceivers can spend a lot of time listening to noise, waiting for packets to arrive or sensing the medium to determine if it is possible to transmit, the listening or "carrier sense (CRS)" mode can be, in practice, a large or the largest consumer of power in a WLAN system. The present solution is focused on reducing the power consumption of a transceiver, such as a wireless LAN transceiver, when operating in the listen mode.

Different schemes can be used to reduce the power consumed in the listen mode. These schemes can include reducing the gain or otherwise degrading the receive noise figure, increasing the observed noise power and reducing the receiver sensitivity. The systems and methods of the present solution can increase the gain, preserve the noise figure while reducing the dynamic range headroom of elements of the analog and digital receiver chains to save power.

In some aspects, noise figure can be a number by which the noise performance of a radio receiver, amplifier, mixer or other circuit block can be specified. In such configurations, the lower the value of the noise figure, the better the performance of the transceiver. In one aspect, the noise figure can define the amount of noise an element adds to the overall system.

The techniques of the present solution can be applied to and would benefit any wireless or wired telecommunications receiver that needs to sense or listen to the medium such as Ethernet (CSMA-CD) or Bluetooth LE beacon discovery. As WLAN listen state power consumption can be a relevant engineering and marketing performance criteria. The techniques of the present solution can reduce power consumed in the listen state by 50% or more.

The technical solutions of the present disclosure allow receiver devices to conserve energy by managing (e.g., reducing) their variable dynamic range (VDR) while operating in a listening mode. The listening mode can be a low-power operational state of a wireless receiver in which the receiver can monitor for incoming preambles preceding data frames. The variable dynamic range (VDR) can be an adjustable range of signal amplitudes that the receiver can handle, extending from the signal noise level up to the maximum level of the signal (e.g., signal peak). This adjustment allows the receiver to optimize its sensitivity and power consumption by reducing the dynamic range when listening for incoming transmissions or increasing it when higher signal fidelity is desired (e.g., during active data reception). When the amplitude of the incoming signal exceeds the dynamic range of the receiver, the signal may be clipped (e.g., the signal peak can be cut off by the saturated receiver circuitry). As a result, the variable nature of the dynamic range allows the receiver to dynamically modify its sensitivity of the incoming signal strength, and therefore the range of the captured received signal. However, increasing the sensitivity and the range of the captured received signal can also increase the power consumption, decreasing the device energy efficiency.

Wireless receivers, such as those of the Wi-Fi, Bluetooth low energy and Zigbee, can have listening modes of operation in which the receiver listens for incoming transmissions. While operating in the listening mode, the receiver device can consume energy according to the VDR utilized by the device, even if no transmissions are being received. Meanwhile, when incoming transmissions do arrive, the receivers operating in their listening modes can detect the preambles that precede the data frames, prior to decoding the frame data. These preambles can be detectable by the receivers even when the receivers operate at their reduced dynamic ranges (e.g., not utilizing their entire VDR). This provides the opportunity for the receivers to save their energy while operating in the listening modes by reducing the VDR until the arrival of the preambles and then increasing the VDR in preparation for decoding and processing of the data frames.

The technical solutions of this disclosure facilitates conservation of energy by the receivers while operating in the listening mode by reducing the VDR of the receiver to a portion of the total amplitude range centered above the signal noise floor. The amplitude range can include a span of signal strength levels that a receiver can detect and process, from the lowest detectable signal to the highest before the saturation of the receiver processing circuitry. Reducing the amplitude range of the VDR allows the receiver to operate a sufficient amount of the VDR to detect any incoming preambles even if the amplitude of the preamble signal exceeds the reduced dynamic of the receiver device (e.g., clipping the preamble signal). The preamble can include any one or more (e.g., a sequence of) signals sent at the start of a wireless transmission to synchronize and prepare the receiver for the incoming data frame comprising data or payload. As a result, the circuitry of the receiver device (e.g., eLNA, PLL and LOGEN, baseband headroom, ADC) can operate at reduced power, conserving energy while operating in the listening mode. Once a preamble is detected, the technical solutions further allow the receiver to apply its automated gain control to adjust (e.g., increase) its VDR to operating points with increased VDR, allowing the receiver to receive and process the entire incoming data frame signal.

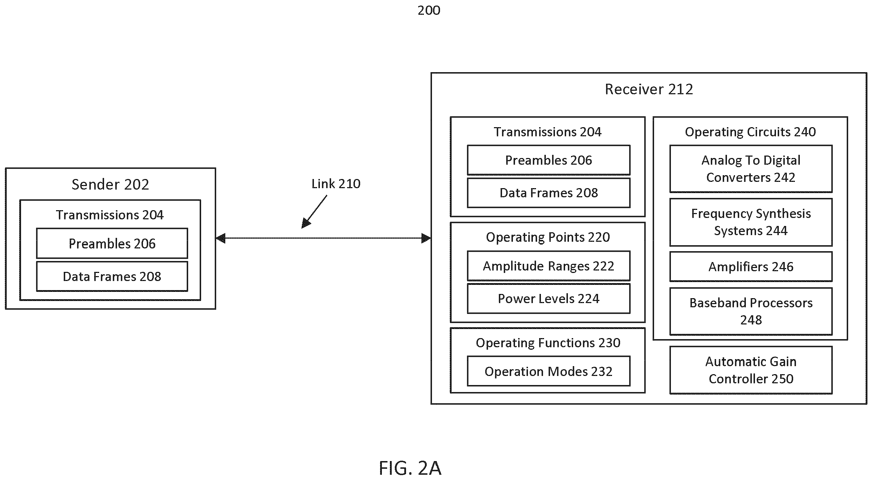

FIG. 2A illustrates an example system 200 for conserving energy by managing variable dynamic range (VDR) of the receiver. Example system 200 can include a sender 202 network device communicating with a receiver 212 network device via a wireless link 210. The sender 202 can generate and transmit one or more transmissions 204 that can include one or more preambles 206 and data frames 208. The receiver 212 can receive the transmissions 204, along with their respective preambles 206 and data frames 208. The receiver 212 can be a variable dynamic range receiver which can include one or more of operating points 220, each of which can have their own amplitude ranges 222 and power levels 224. The receivers 212 can include one or more operating functions 230 to implement various receiver operation functions, including according to different operation modes 232 (e.g., listening or receiving modes). The receiver 212 can include one or more automatic gain controllers 250 and one or more operating circuits 240 for implementing various receiver operations. The operating circuits 240 can include any one or more of: analog to digital converters (ADCs) 242, frequency synthesis systems 244 (e.g., phase-locked loops or local oscillator generators), amplifiers 246 and baseband processors 248.

At a high level, the system 200 can include the sender 202 and the receiver 212 in a wireless communication via one or more links 210, such as the wireless links 210 facilitating a communication over a wireless local area network (WLAN) of a Wi-Fi communication system, a communication of a Bluetooth low energy system or a communication of a Zigbee system. The sender 202 can occasionally transmit to the receiver 212 one or more transmissions 204 in which the preamble 206 of the transmissions 204 can precede the data frame 208. The receiver 212 can be configured to receive wireless transmissions 204 from the sender. The transmissions 204 can have any one of a plurality of amplitude ranges 222 that can correspond to any one of a plurality of corresponding power levels 224. The receiver 212 can include one or more processors (e.g., 121) that can be coupled with one or more caches 140 or memories 140 that can store instructions, commands or data to implement the functionalities or features of the receiver 212 described herein, such as various operations at different amplitude ranges 222 or power levels 224 or different operation modes 232.

For instance, during the pauses when the receiver 212 awaits arrival of any of the transmissions, the receiver 212 can be engaged in a listening operation mode 232. During the listening operation mode 232, the receiver 212 can operate according to a reduced operating point 220 whose amplitude range 222 (e.g., active range of the VDR) is reduced, allowing the receiver 212 to conserve energy during the listening operation mode 232. For instance, a processor 121 of a receiver 212 can be configured (e.g., via instructions, data or commands stored in memory 122 or cache 140) to operate, for a listening operation mode 232 of the receiver 212, at a reduced amplitude range 222 of the plurality of amplitude ranges 222 for which the receiver 212 can listen for a preamble 206 of a data frame 208 of a wireless transmission 204.

The reduced amplitude range 222 can include any reduced or narrower range of signal strengths that a receiver can process, centered around the noise level, used to conserve power during low peak amplitude or low maximum amplitude operations such as listening mode. The reduced amplitude range 222 can be at, or correspond to, a reduced amplitude or power level that can be below an amplitude or power threshold, such as a power threshold of a power level 224 associated with a level of power or energy savings. The increased amplitude range can refer to a wider range of signal amplitudes that a receiver can handle or process, allowing the receiver to detect and process stronger or more powerful signals, such as the signals of the data frame which the receiver can receiver while operating in the receiving mode.

The power threshold can be any a predefined signal strength level that can be used by the receiver to switch between operating modes, such as transitioning from a reduced power listening mode (e.g., below a threshold level) to a higher power receiving mode when the signal exceeds this level, or exceeds a second threshold level above the first threshold level. In some configurations, the threshold can be an amplitude threshold, a signal range threshold (e.g., corresponding to range of signal that can be captured at the ADC), or a linearity threshold (e.g., corresponding to linearity of an amplifier to adjust). The switching can refer to the process of changing the receiver's operational settings from one configuration or mode to another, such as from a reduced amplitude range to an increased amplitude range. The power level can refer to the magnitude of the signal's power, typically measured in units such as watts, milliwatts, or decibels, which indicates the strength of the signal. For example, switching to an increased amplitude range can include adjusting the receiver's gain settings and power levels to enhance sensitivity and capture higher signal strengths for improved data reception.

By operating at reduced amplitude range 222 of the VDR, each one of the operating circuits 240 can operate (e.g., during the listening operation mode 232) at reduced power levels. For instance, the analog to digital converter 242 can save energy by reducing the active dynamic range, thereby processing only the necessary portion of the signal and avoiding the power consumption associated with handling of the unused portion of the dynamic range. The frequency synthesis system 244, including PLLs and LOGENs, can conserve power by reducing operating current and reducing phase noise requirements. The amplifier 246 can save power by lowering its supply voltage, while maintaining its gain and noise figure, resulting in reduced linearity. The baseband processor 248 can conserve energy by minimizing its processing tasks and operating at a lower clock speed. In doing so, reduced amplitude ranges 222 can correspond to lower power consumption levels, allowing for energy savings during the listening operation modes 232.

When a receiver 212 detects an arrival of a transmission 204 (e.g., by detecting an incoming preamble 206 of the transmission 204, preceding the data frame 208), the receiver 212 can switch from the listening operation mode 232 to a receiving operation mode 232. For instance, the processor 121 can be configured (e.g., via instructions, commands or data stored in memory 122 or cache 140) to receive, while operating at the reduced amplitude range 222, the preamble 206 of the data frame 208. For instance, the processor 121 can determine that an incoming signal within the reduced amplitude range 222 corresponds to a preamble 206 of an incoming transmission 204. The processor 121 can determine, based on the detected preamble 206, that a data frame 208 is to follow the preamble 206 within a predetermined time interval, such as within 10-30 microseconds for a Wi-Fi transmission or within 100-150 microseconds for a Bluetooth LE transmission.

The receiver 212 (e.g., the processors 121) can be configured to switch, for a receiving operation mode 232 of the receiver 212, responsive to receiving the preamble 206 of the data frame 208, to an increased amplitude range 222 to receive the data frame 208. The increased amplitude range can include any expanded signal range a receiver be configured to utilize or handle, allowing the receiver to capture higher signal levels or range during data reception for improved signal fidelity.

The increased amplitude range 222 can operate at an increased power level 224, which can be above the power threshold, below which the power level 224 of the reduced amplitude range 222 was during the listening operation mode 232. The receiver 212 can utilize operating functions 230 to adjust the operating points 220 from those of the reduced amplitude ranges 222 and their corresponding reduced power levels 224 used during the listening mode to the operating points 220 that have increased amplitude ranges 222 and their corresponding increased power levels 224, as utilized during the receiving mode. The receiving mode can be any the operational state of a receiver in which the receiver is configured to process or decode the incoming data (e.g., the data frame), following the detection of a preamble (e.g., in the listening mode). In doing so, the operating functions 230 can increase the amplitude range 222 activated and utilized by the receiver 212 allowing the full range of the signal range of the preamble 206 or the data frame 208 to be received and processed by the receiver 212.

Sender 202 and the receiver 212 can include any combination of hardware and software, such as devices configured for wireless communication. The sender 202 and the receiver 212 can include any computing systems, such as Wi-Fi routers or access points, computers or laptops, smartphones, smart watches, or internet of things (IoT) devices. The sender 202 and receiver 212 can be configured for wireless communication via WLANs, cellular networks, Bluetooth, Zigbee or any wired or wireless networks. The sender 202 can be configured for generating and transmitting data packets, which include a preamble 206 followed by a data frame 208.

Transmissions 204 can include any sequence of data sent from a sender 202 to a receiver 212 over a wireless link 210. A transmission 204 can include at least two main components: the preamble 206 and the data frame 208. The preamble 206 can include an initial signal or set of signals that precedes the actual data frame 208. The preamble 206 can serves one or more purposes, including allowing the receiver 212 to synchronize with the incoming signal, perform initial signal processing, and determine the start of the data frame 208. Following the preamble, the data frame 208 can include the actual information being transmitted (e.g., payload), which can include the data intended for reception, along with any control and error-checking information.

The preamble 206 can include any information or data that can indicate or signal the start of a transmission 204. The preamble 206 can include fields, indications or flags that can facilitate or allow the receiver 212 to synchronize with the incoming data and adjust its operation to receive the data. The receiver 212 can be equipped with a variable dynamic range (VDR) capability to adjust its operational parameters based on the operation mode 232.

The data frame 208 can include any unit of data transmitted over a network. The data frame can include both the payload data and the necessary metadata for proper data interpretation and error checking. The data frame 208 can typically follow a preamble 206, which can signal the start of the transmission 204 and allows the receiver 212 to synchronize and prepare to decode the incoming data frame 208 effectively. For instance, during a listening operation mode 232, the receiver 212 can operate with a reduced amplitude range 222 and a corresponding power level 224 that is below a particular predetermined threshold to facilitate conserving energy of the receiver while monitoring for incoming preambles 206. Once a preamble 206 is detected (e.g., by the operating function 230), the receiver 212 can utilize the automatic gain controller 250 to transition from the reduced amplitude range 222 to an increased amplitude range 222 and its increased power level 224 (e.g., to start a receiving operation mode 232). In doing so, the receiver 212 can increase its dynamic range and power level to accurately process and decode the data frame 208.

Links 210 can include any communication channels that facilitate the transmission of data between devices with or without any physical connections, such as wires or cables, or electromagnetic waves. Links 210 can facilitate any combination of wired or wireless communication through various technologies, each tailored for certain environments. For instance, links 210 can include or facilitate Wi-Fi connections, providing high-speed data transfer over short to medium distances, commonly used in local area networks (LANs). For instance, links 210 can include or facilitate Bluetooth short-range communication between devices, such as those of personal area networks (PANs) and low-power applications. For instance, Zigbee can support low-power, low-data-rate communication over short distances, typically used in home automation and IoT devices. For instance, links 210 can include or facilitate cellular network connections, including those of 4G and 5G long-range, high-speed data transfer over broader areas. For instance, links 210 can include or facilitate LoRa (Long Range) offering low-power, wide-area network capabilities for IoT applications.

Operating points 220 can include any specific configurations of amplitude ranges and corresponding power levels of a variable dynamic range (VDR) system that the receiver can utilize to process incoming signals. Each operating point 220 can be characterized by a distinct amplitude range 222, which can represent the span of signal intensities that the receiver can handle effectively. The amplitude range 222 can determine or indicate what range of signal power levels can be captured, detected or represented by the system without introducing distortion or noise.

Corresponding power levels 224 indicate the amount of power consumed by the receiver's operating circuits 240 when operating at a given amplitude range 222. Lower amplitude ranges 222 and their corresponding lower power levels 224 can be used during operations in which accuracy may not be restrictive, such as for example in arrival of preambles 206 during listening operation modes 232, in order to conserve energy. In contrast, higher amplitude ranges 222 and corresponding higher power levels 224 can be employed during active data reception to ensure high resolution and robust signal processing as well as accurate data decoding. By dynamically adjusting, tuning, configuring, changing or adjusting between these operating points 220, the receiver 212 can balance the energy efficiency (e.g., during listening modes) and performance (e.g., during receiving modes) based on the current operational preferences.

Operating functions 230 for a receiver 212 can include any combination of hardware and software for performing operations or functionalities of the receiver 212 with respect to receiving of incoming signals or conserving energy. Operating functions 230 can include any functions for implementing any specific processes or tasks that the receiver 212 performs to manage and process incoming signals. Operating functions 230 can include for instance functions involving any signal receiving, identification, detection, amplification, conversion, and data processing for any operation modes 232.

Operation modes 232 can include any distinct states or phases in which the receiver operates, such as a listening mode or a receiving mode. In a listening operation mode 232, also referred to as the listening mode, the receiver can be configured or set to monitor incoming signals with reduced or minimal power consumption, focusing on detecting preambles or signal indicators using reduced amplitude ranges 222 (e.g., amplitude range 222 set to a particular power level 224). In a receiving operation mode 232, also referred to as the receiving mode, the receiver can be actively engaged in decoding and processing the data frames 208. During the receiving mode, the operating function 230 can switch to a higher amplitude range 222 and increased power levels 224 to handle the full dynamic range of the signal.

The receiver 212 can be configured to adjust and select different operating points based on the operation modes 232. For instance, in a listening mode, the receiver 212 can use an operating point 220 with a particular (e.g., narrow) amplitude range and lower power to preserve battery life. For instance, the operating point 232 can be distinguished by the amplitude ranges 222 and the power levels 224, allowing the operating function 230 to select from the plurality of operating points 220, the particular operating points 220 for a given desired power level 224 (e.g., energy consumption level) or a given amplitude range 222 (e.g., a given VDR range to utilize).

However, when transitioning to a receiving mode, the receiver 212 can select an operating point 220 with a wider amplitude range 222 and higher power 224 to capture and decode the complete data frame 208 effectively. For instance, the operating function 230 can employ and utilize an automatic gain controller 250 to determine the lowest amplitude range 222 and its corresponding (e.g., lowest) power level 224 that is sufficiently large to fully capture the data frame 208 signals. In doing so, the operating function 230 and the automatic gain controller 250 can maximize the energy saving without sacrificing the incoming signal processing performance. This dynamic adjustment of operating points 220 can allow the receiver 212 to optimize both performance and energy efficiency depending on its current operational requirements.

Operating circuits 240 can include any circuits that can operate at reduced power or energy, depending on the operation mode 232. For example, in the listening operation mode 232, several operating circuits within the receiver can be adjusted or configured to save energy while still maintaining the capability to detect incoming transmissions (e.g., a monitor for incoming preambles 206). For example, an analog-to-digital converter (ADC) 242 can be set to utilize only a portion of its dynamic range, thereby reducing power consumption by avoiding unnecessary processing of signal amplitudes outside the limited selected range (e.g., corresponding to the amplitude range 222 used during the listening mode). Similarly, the frequency synthesis systems 244, such as the phase-locked loops (PLLs) and local oscillator generators (LOGENs), can be operated at reduced current levels or increased phase noise levels, resulting in lower power usage while maintaining adequate phase noise performance for the listening mode signal detection. Likewise, amplifies 246, such as low noise amplifiers (LNAs), can be configured to operate at a reduced linearity, decreasing their power consumption without compromising the ability to detect weak preamble 206 signals. Similarly, the baseband processors 248 can be adjusted to perform minimal processing tasks, reducing their operational loads and conserving energy during periods when the receiver 212 is not actively decoding data frames 208.

Analog to digital converter (ADC) 242 can include any circuit or component in a receiver 212 that converts analog signals into digital data. By sampling the incoming analog signal at discrete intervals, the ADC 242 can translate continuous signal amplitudes into a digital format that can be analyzed by the receiver's digital circuits. In energy-saving modes, the ADC 242 can be configured to use a reduced portion of its dynamic range, minimizing power consumption while allowing for the detection of significant signal events, such as preambles 206. The receiver 212 can include multiple ADCs 242 that can be configured for any number of low and high amplitude ranges 222 and power levels 224. For instance, a receiver 212 can include a low energy and low performance ADC 242 configured for operation at reduced or minimized amplitude range 222 and its corresponding reduced or minimized power level 224, such as the one most suitable for a listening operation mode 232. For instance, a receiver 212 can include a high energy and a high performance ADC 242 configured for increased or maximized amplitude ranges 222 and their corresponding power levels 224. The receiver 212 can also include any number of ADCs 242 configured for operating points 220 with amplitude ranges 222 and power levels 224 set between the minimized and maximized operating points 220, allowing for selection between any number of amplitude ranges 222 and power levels 224 for any number of operating points 220.

Frequency Synthesis Systems 244, such as phase-locked loops (PLLs) and local oscillator generators (LOGENs), can include any circuitry responsible for generating desired or tuned frequency signals needed for signal processing and demodulation. A PLL can be configured to lock the phase of a local oscillator signal to a reference signal, while a LOGEN can convert the output of the PLL to a signal which can drive a mixer. To save energy during the listening operation mode 232, both the PLL and LOGEN can be operated at reduced current levels or increased noise, which can decrease their power consumption while still maintaining sufficient frequency accuracy to detect incoming signals. The receiver 212 can include multiple frequency synthesis systems 244 that can be configured for any number of low and high amplitude ranges 222 and power levels 224. For instance, a receiver 212 can include a low energy and low performance frequency synthesis system 244 configured for operation at reduced or minimized amplitude range 222 and its corresponding reduced or minimized power level 224, such as the one most suitable for a listening operation mode 232. For instance, a receiver 212 can include a high energy and a high performance frequency synthesis system 244 configured for increased or maximized amplitude ranges 222 and their corresponding power levels 224. The receiver 212 can also include any number of frequency synthesis systems 244 configured for operating points 220 with amplitude ranges 222 and power levels 224 set between the minimized and maximized operating points 220, allowing for selection between any number of amplitude ranges 222 and power levels 224 for any number of operating points 220.

Amplifiers 246, such as any signal, power or external low noise amplifiers (eLNAs), can include any circuits used to boost the strength of incoming signals to a level suitable for further processing. Amplifiers 246 can be coupled with transceivers (e.g., antenna circuitry) for amplifying or processing the incoming signal. In a listening operation mode 232, an amplifier 246 can be adjusted to operate at a lower linearity setting, thereby reducing its power consumption. This adjustment can facilitate that the amplifier 246 provides a sufficient linearity to detect preambles 206 without consuming more energy than needed to do so, when the receiver is not actively processing data frames 208.

Baseband processors 248 can include any combination of hardware and software for handling the digital signal processing tasks for decoding and interpreting the received data frames 208. During a listening operation mode 232, the baseband processor 248 can be configured to perform minimal processing tasks, which can reduce its computational load and power usage, allowing the receiver 212 to reduce its operational speed (e.g., clock) and conserve energy. By focusing only on the functions to be performed for the listening operation mode 232, such as preamble detection tasks, the baseband processor 248 can conserve the energy while still facilitating the receiver to identify the presence of incoming transmissions.

Automatic gain controller (AGC) 250, also referred to as the controller 250, can include any combination of hardware and software that can dynamically adjust the gain of the receiver 212. The controller 250 can include any functionality for adjusting or managing the gain (e.g., automatic gain control) or the variable dynamic range (VDR) operation of the receiver 202. The controller 250 can include, for example, a hardwired circuitry configured to perform operations of the AGC 250, including any AGC or VDR operation or functionality. For instance, a controller 250 can be a state machine implemented using a combination of digital logic gates configured to perform the functionalities or operations of the controller 250 described herein.

The AGC 250 can include the functionality to adjust the gain of the receiver 212 to maintain a consistent signal level for optimal processing. The AGC 250 can continuously monitor the amplitude of incoming signals and modify, select or adjust the amplitude range 222 of the VDR to select the range at which the signal is neither too weak nor too strong (e.g., suitable for processing). The AGC can manage the receiver's dynamic range, allowing the receiver 212 to operate with a reduced dynamic range and lower power consumption while listening for preambles 206. Once a preamble is detected (e.g., by the operating function 230) the AGC 250 can adjust the gain to increase the dynamic range (e.g., increase the amplitude range 222), preparing the receiver to handle the data frame 208 with full fidelity.

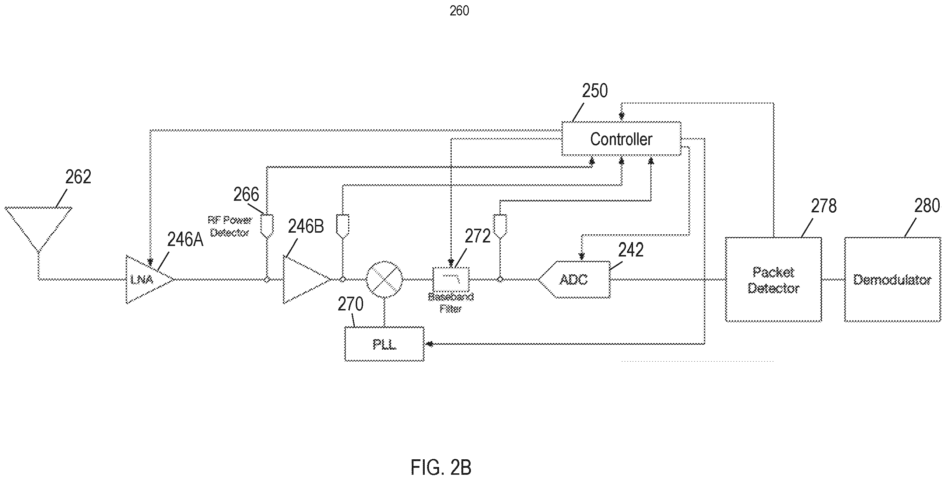

FIG. 2B illustrates an example transceiver 260 of a receiver 202 that can be utilized to implement the functionalities of the present solutions. The example transceiver 260 can include or correspond to any functionality of the operating circuits 240 in the example 200 of FIG. 2A, and vice versa. The example transceiver 260 can include one or more of: antennas 262, low noise amplifiers (LNAs) 246A, RF power detectors 266, power amplifiers 246B, phase lock loops (PLLs) 270, baseband filters 272, analog to digital converters (ADCs) 242, controllers 250, packet detectors 278 and demodulators 280. The transceiver 260 can be configured to communicate (e.g., transmit or receive) signals via an antenna 262 and utilize a controller 250 that can be configured for AGC and VDR control and which can be coupled with each one of a LNA 246A, one or more RF power detectors 266, a power amplifier 246B, baseband filter 272, the ADC 242 and the packet detector 278 that can further be coupled with a demodulator 280.

The controller 250 can receive power detection signals from the RF power detectors 266, which can be located at the output of the LNA 246A or input of the power amplifier 246B, at the output of the power amplifier 246B and between the baseband filter 272 and the ADC 242. The controller can provide outputs to control any one or more of: the LNA 246A, the baseband filter 272 and the ADC 242. In one example, the signal received via an antenna 262 can be processed by an LNA 246A, the output of which can be input into the power amplifier 246B. The output signal from the power amplifier 246B can be used by the PLL 270 to provide the clock or timing signal for the system. The output of the power amplifier 246B can be input into the baseband signal 272, the output of which can be input into the ADC 242 to convert the analog signal into a digital signal. The output digital signal of the ADC 242 can be input into a packet detector 278 for detecting network packets. The output of the packet detector 278 can be input into a demodulator 280 for demodulating and processing the network packets. Based on the processed incoming packet signals, the packets can be detected and controller 250 can adjust the gain and the DR as desired.

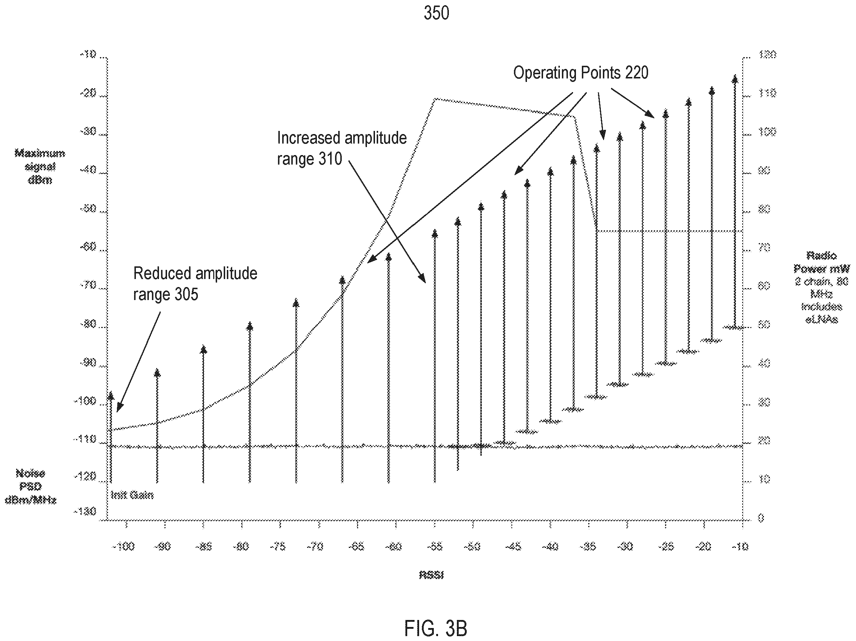

The controller 250 of the example transceiver 260 can be configured to conserve energy by operating at initial point of the reduced amplitude range 205 while listening for preambles of the incoming data packets and then switching to the increased amplitude range 310 once incoming preamble is detected. For example, as less DR can be utilized at a new initial gain operating point 220 (e.g., the lowest or the left-most operating point of the reduced amplitude range 305, shown in FIG. 3B), the power consumption one or more radio circuits can be reduced to function at this operating point 220. This can be clearly seen with the ADC 242 as the DR of an ADC can often be quantified at the digital output as the Effective Number of Bits (ENOB). The ENOB can include a value identifying the number of bits (e.g., the minimal number of bits) that is sufficient to fully cover and quantize the ADC DR. The power consumed by an ADC 242 can be a function of the ENOB and therefore the power can be reduced by about 75% for every ENOB bit removed. This can be implemented in various ways. For example, depending on the system design, two ADCs 242 can be utilized, such that a first ADC 242 is configured to operate at high DR, but consume higher power, while the second ADC 242 can be configured to operate at low DR, but consume less power. The controller 250 can include VDR controlling functionality to use the low DR/power ADC at the initial gain point at the reduced amplitude range 305, and also operate the high DR/power ADC for all other operating points 220 (e.g., increased amplitude range 310).

The transceiver 260 can also similarly improve energy efficiency of the PLL 270. For instance, a high DR receiver can utilize a PLL with a correspondingly low Phase Noise (PN), and vice-versa. Since the power consumed by a PLL can increase as its PN gets larger, the controller 250 can reconfigure the operation to switch to an initial gain at the reduced amplitude range 305 with a low PN PLL and reduced power consumption. For example, a device can be configured to utilize two PLLs, including a first PLL 270 operating at a low PN and high power consumption and a second PLL 270 that has high PN and low power consumption. The controller 250 can control the VDR to select between the two PLLs 270, turning off the PLL 270 that is not utilized, thereby saving energy when the device is in the listen mode.

The configurations utilized can involve boosting the gain ahead of an element of the transceiver 260, such as an ADC 242 or PLL 270 plus a mixer, to maintain the overall cascaded noise figure if the effective noise power increases. For example, when reducing the ENOB, the ADC quantization noise can rise, which can be compensated with higher gain prior to the ADC 242. In such instances, an additional gain can be achieved with less additional power than is saved in the ADC.

For example, a configuration can involve reducing the supply voltage to a particular circuit. For example, an LNA 246A may need a higher supply voltage to remain linear (to maintain its DR) when operating with a strong signal (either in-band or out-of-band). However, in the absence of a strong signal, the LNA 246A can operate with a lower voltage and reduced power consumption. The voltage switch can be controlled by the controller 250 and its VDR functionality or logic to conserve energy during the listen mode.

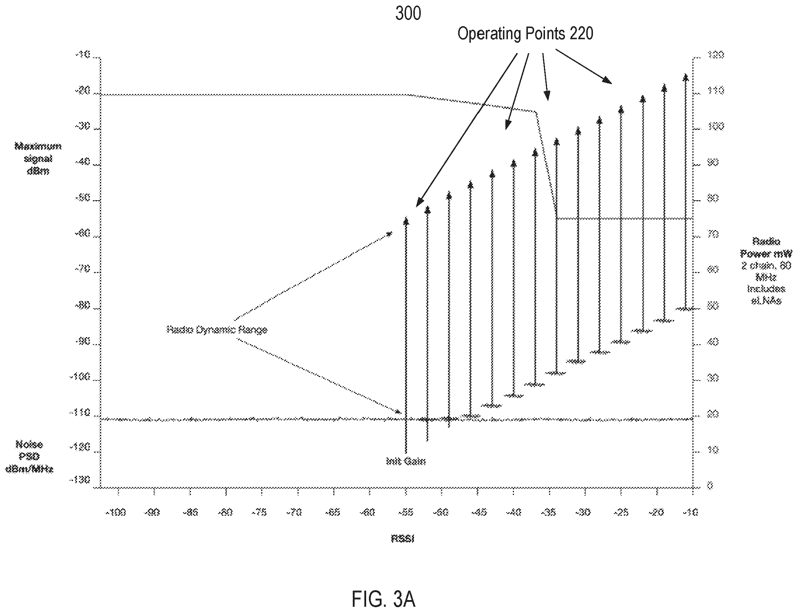

FIG. 3A illustrates an example diagram 300 of a traditional Wi-Fi receiver in which the radio maintains full dynamic range performance regardless of the receive (Rx) signal level. The plot shows the x-axis plotted in terms of the received signal strength indicator (RSSI), while the y-axes are plotted in terms of radio power milliwatts (mW) or decibels relative to one 1mW (dBm). As noted by the diagram 300, a series of operating points 220 having their amplitude ranges 222 and the power levels 224 (e.g., radio power consumption) can be provided, but they may not change significantly (e.g., in terms of their amplitude range or power) with the radio gain until the external low noise amplifiers (eLNAs) are turned off for very strong signals.

For example, a receiver 212 can be configured so that the listen function is be performed with the radio configured for the lowest cascaded noise figure as the packets can be detected before the data portion can be demodulated and the preamble structure can have, rely on or utilize almost as much SNR as the data portion of the packet. For this reason, the highest gain can be referred to as the 'Init Gain' or initial gain, which can correspond to the reduced amplitude range 305. From there, the AGC can adjust (e.g., reduce) the gain as necessary to avoid having a packet clip (e.g., distortion of the packet signal) by having power which exceeds the top of the DR window or range. Data packets that are received at lower power levels may fall within the initial gain range and may not trigger any adjustment on the operating point 220 at all, depending on the configuration and operation.

FIG. 3A can refer to configurations of receivers in which the DR window can remain at its designed maximum (for example, 60 dB) at every operating point 220 for the automatic gain control. In such configurations, as shown in plot 300, the x-axis can correspond to the radio operating point, largely corresponding to the total radio gain. The y-axis scale can show the range of signal levels the receiver can accommodate. The plot 300 shows a vertical arrow for each AGC operating point 220. For example, at the initial gain point in plot 300, a signal with a peak of no more than -55 dBm can be accommodated. Anything signal higher than that would trigger reduction of the gain which can then result in moving the DR window upwards to one of the operating points 220 further to the right.

Referring to FIG. 3B is a diagram 350 of an example configuration of a variable dynamic range receiver in which the additional operating points 220 (e.g., the gain steps) are added between the original initial gain operating point (e.g., at the increased amplitude range 310) and the new initial gain point at the reduced amplitude range 305. As shown in diagram 350, additional operating points 220 can be added towards the left side (e.g., the lower values of RSSI) and the initial gain can be moved to a higher gain, such as a highest possible gain. For each of the higher gain operating points, the dynamic range of the radio blocks can be decreased to save power, while the noise figure is preserved. The automatic gain control (AGC) can operate from the initial gain, the AGC can back off the gain until the received power is within the acceptable full scale. As with the example diagram 300, the example diagram 350 also shows the plot in which the x-axis is plotted in terms of the received signal strength indicator (RSSI), while the y-axes are plotted in terms of radio power mW or dBm.

Example diagram 350 shows an example of an initial (e.g., init.) point that can correspond to the reduced amplitude range 305. The reduced amplitude range 305 can be expressed as an arrow whose magnitude (e.g., power level of the operating point 220) is presented as shortest of the magnitudes of other arrows (e.g., operating points 220). The increased amplitude range 310 can be presented as the operating point 220 that is the largest or among the largest of the operating points 220, indicating an example in which the increased amplitude range 310 corresponds to the maximized amplitude range, although any other operating points 220 larger than the reduced amplitude range 305 can be selected, depending on the configuration.

As shown in the example diagram 350, the VDR adjustment technique may not be limited to a single additional operating point 220 (e.g., at the initial point for the reduced amplitude range 305 shown in FIG. 3B). Rather, depending on the design, multiple additional operating points 220 with multiple levels of amplitude ranges (e.g., between the heights of 305 and 310) can be provided with increasing dynamic range added to match the power level of the incoming signal with the lowest corresponding operating point.

As shown in plot 350 of FIG. 3B, with each additional operating point 220 added between the initial gain of the reduced amplitude range 305 and the increased amplitude range 310, the DR can increase by a set amount, such as 6 dB and the power consumed by the radio can also increase. The operating points 220 on the right side of the plot 350 can be used for packets with high RF power levels, since less radio gain can be utilized for these packets, while the power consumption also decreases.

In different implementations of the variable dynamic range receiver, the following elements may be used to get the power savings. For external low noise amplifiers (eLNAs) the supply voltage may be changed from 1.8 V to VBAT (voltage batter) based on the presence of strong blockers. For the VDR receiver, this mechanism may be coupled into the VDR gain table. With respect to phase lock loops (PLL) and low generation (LOGEN), a 24 dB dynamic range receiver may have no use for the phase noise performance that systems provide for either EVM (error vector magnitude) or reciprocal mixing. Implementations of the present solution "turn up" the phase noise and reduce the power consumption with each step of increased gain. Such implementations may use a second low power PLL/VCO (voltage controlled oscillator). With respect to baseband headroom, implementations of the present solution may select between 0.6V, 0.8V 1.2V and 1.5V based on the dynamic range needs. With respect to operation of the analog digital converter (ADC), implementations of the present solution may drop 1 bit of ENOB (effective number of bits) or each new gain step. For the initial gain, implementations of the present solution may operate with just 4 bits.

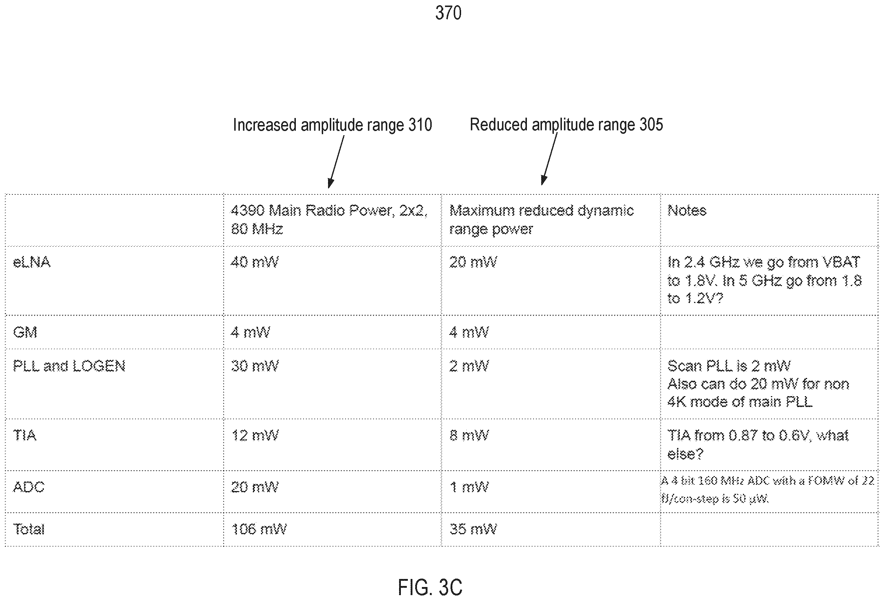

With these implementations, FIG. 3C illustrates an example table 370 in which various receiver operating circuits 240 exhibit their power or energy savings between the increased amplitude range 310 (e.g., where the power is not reduced) and the reduced amplitude range 305 (e.g., where the power is reduced). The example table 370 shows the power savings under various scenarios and elements of the receiver, including for eLNAs, transimpedance amplifiers (TIA) and GM-cell (GM), PLL and LOGEN and the ADC 242. In other aspects, the present solution can be used to scale the dynamic range of a time-interleaved SAR ADC (Successive Approximation Register (SAR) Analog-to-Digital Converters (ADCs)). For example, if you started with a 4-way interleaved ADC you could cut the SAR converter power by ~¾ by dropping to a single unit SAR ADC which was given only ¼ of the time to complete its conversion.

As shown in table 370, eLNA can go from 40mW during the increased amplitude range operation down to 20mW during the reduced amplitude range. Similarly, the PLL and LOGEN can go from 30mW during the increased amplitude range operation down to 2mW during the reduced amplitude range operation. Similarly, TIA can go from 12mW at the increased amplitude range down to 8mW and the ADC can go from 20mW at the increased amplitude range down to 1mW when operating at the reduced amplitude range operation of the VDR.

In some aspects of implementations of the present solution, the leading adjacent channel interference (ACI) or blocker is fine since the wideband AGC backs off the gain to accommodate any signal regardless of whether it is in-band or out of ban. However, ACI that comes after the desired signal will interfere with the desired reception to a much larger degree than before. A way to address this is to use an AGC with memory that recognizes when there is strong interference or strong interferers and back off the initial gain preemptively. Another way is to implement a packet Rx at a 55 dB gain operating point or below. If the receiver of the present solution is capturing the entire band, then there should be enough visibility in the digital power to set the gain appropriately. However, for a traditional selective receiver, the WRSSI (wireless received signal strength indicator) function may need to be improved to accommodate the additional requirements of the VDR receiver of the present solution.

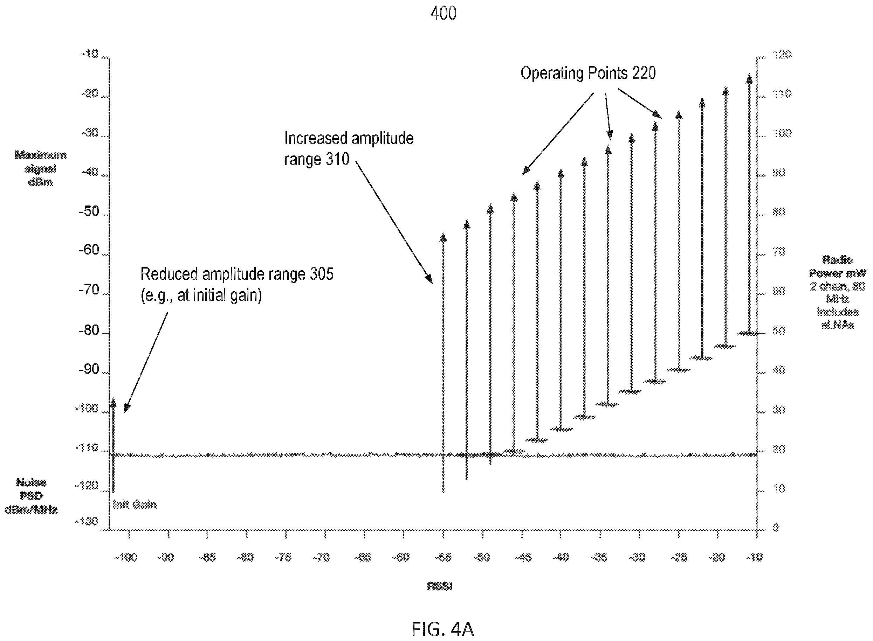

Referring to FIG. 4A, an example plot 400 of a design or implementation of the present solution in which an additional initial gain point is added. Depending on the configuration, the receiver of the present solution can drop all or most the intermediate points and just have a single initial gain point configured to operate on a low power "listen mode", shown having the reduced amplitude range 305. The increased amplitude range 310 can correspond to any of the operating points 220 with increased DR window.

In device configurations corresponding to the plot 400, the sender device and its VDR Wi-Fi transceiver can listen at the new initial gain (e.g., lowest) operating point 220 (e.g., the operation point of the reduced amplitude range 305) and still achieve the same performance as the non-VDR receiver. The new initial gain operating point can reduce the maximum signal receivable, but the noise power can remain the same, resulting in the packet detection sensitivity being unchanged.

For example, after detecting a weak signal at the new initial gain (e.g., the lowest) operating point 220 (e.g., at the reduced amplitude range 305), the Wi-Fi function can move the radio operating point to the prior (e.g., old) initial gain operating point in the preamble (e.g., at the increased amplitude range 310), prior to the start of the complex modulation of the data portion of the packet. This can ensure that packet's data portion with a higher PAR can be successfully received. It can also ensure that any blockers that appear during the packet reception on adjacent spectrum can be tolerated at the same level as with the non-VDR receiver.

Packets with power levels that exceed the maximum of the new initial gain DR (e.g., at the reduced amplitude range 305), can trigger an immediate response by the AGC to adjust (e.g., reduce) the gain to an operating point 220 with a sufficient DR headroom. This mechanism can correspond to the mechanism of a non-VDR receiver, except that there is a larger range of packet powers which trigger the AGC response to move away from the initial gain (e.g., at the reduced amplitude range 305).

Depending on the configuration, the controller 250 can operate its VDR functionality to adjust its VDR across any one of the range of operating points 220 between the lowest operating point 220 (e.g., at the reduced amplitude range 305) and the operating point at increased amplitude range 310. These intermediate or intervening operating points 220 can be partly reduced with respect to those at increased amplitude range 310, but still larger than the one at the reduced amplitude range 305. The controller 250 can operate the VDR such that it does not always switch to the original full DR (e.g., increased amplitude range 310) after detecting a packet, but rather the controller 250 can choose one of the intervening operating points 220. For instance, the controller 250 can choose to remain at the lowest DR operating point at which the packet was not clipped for the duration of the packet reception. In such instances, the controller 250 can operate at the smallest intervening operating point 202 that is sufficiently large not to clip or distort the signal. This operation or configuration can reduce the power consumed in the receive mode, similar to the way it is saved in the listen mode.

Accordingly, depending on the configuration, the receiver 202 can vary its dynamic range (DR) along with its gain. The receiver 202 can listens for packets or RF energy in a reduced DR mode (e.g., at the operating point 220 of the reduced amplitude range 305). The receiver 202 can switch to the full dynamic range mode (e.g., at the operating range 220 at the increased amplitude range 310) after detecting a packet preamble or energy. The receiver 202 can then again switch back to the initial operating point 202 (e.g., at the reduced amplitude range 305) once the incoming transmissions end. In doing so, the receiver 202 can reduce the power consumed during its operation at the listening mode of the radio receiver.

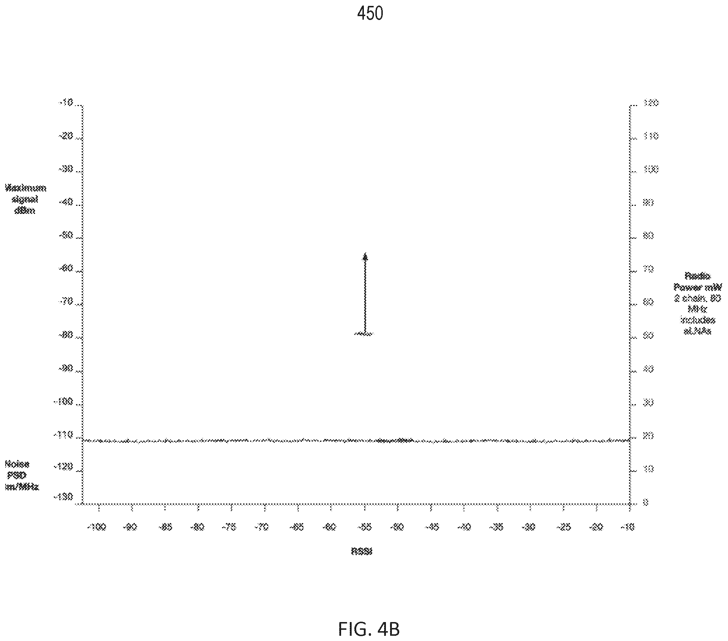

Referring to FIG. 4B, an example plot 450 of another design or implementation of the present solution could be considered. In some embodiments, a second knob may be implemented that would independently control the dynamic range so to have an operating point as illustrated in the chart of FIG. 3B. To use this mode for packet Rx, the system can know and utilize the desired SNR (signal noise ratio) for the modulation prior to AGC. Some implementations should maintain a semi-static non-4K QAM mode for use when being used or associated with an access point that is not 4K capable.

In aspects of the RSSI threshold detectors, implementations of the VDR of the present solution may need do a gain change for any in-band (5-7 GHz) signal above about -85 dBm. Furthermore, to achieve accurate AGC in a single gain change may require wideband RSSI detectors every 6 dB throughout the receiver dynamic range. For example, 14 threshold detectors from -6 dBm to -84 dBm. Another example implementation may use a single detector driving a low-rate, high dynamic range ADC.

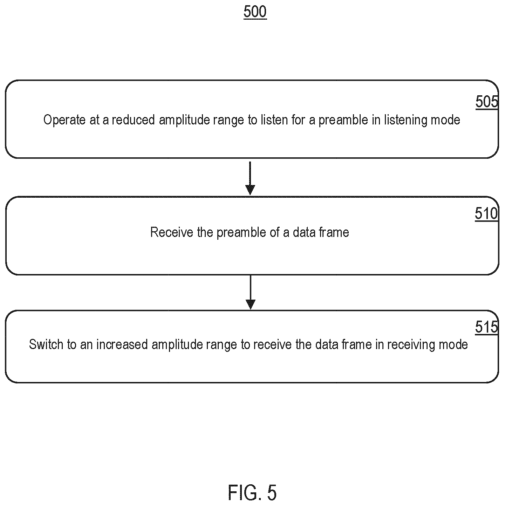

FIG. 5 illustrates an example method 500 for conserving energy by managing variable dynamic range (VDR) of the receiver. The method 500 can be implemented using, for example, systems features or techniques discussed in connections with FIGs. 1A-1C, including for example, system 100 implemented to facilitate a system 200. The method 500 can include acts or operations 505-515. At 505, the method can operate at a reduced amplitude range to listen for a preamble in a listening mode. At 510, the method can receive the preamble of a data frame. At 515, the method can switch to an increased amplitude range to receive the data frame in a receiving mode.

At 505, the method can operate at a reduced amplitude range to listen for a preamble in a listening mode. The method can include one or more processors, that are coupled with memory of a receiver, operating for a listening mode of the receiver at a reduced amplitude range of the plurality of amplitude ranges for which to listen for a preamble of a data frame of a wireless transmission. The receiver can be configured to receive wireless transmissions having a plurality of amplitude ranges at a plurality of corresponding power levels. The reduced amplitude range can correspond to a reduced power level. The reduced power level can be below a power threshold, such as an amount of power predetermined as the power level at which to operate the receiver circuitry during the listening mode.

The preamble and the data frame can be a part of a communication protocol comprising at least one of a Wi-Fi technology, a Bluetooth technology or a Zigbee technology. For instance, the receiver device can be a wireless communication device configured for communication via a WLAN, such as a Wi-Fi access point device or a station device configured for communication with an access point.

The one or more processors can be operating, for or during the listening mode, at the reduced amplitude range of a first analog to digital converter (ADC) of the receiver. For instance, the reduced amplitude range of the VDR can be established, provided or configured by the first ADC of a plurality of ADCs. The first ADC can have a reduced amplitude range not exceeding an amplitude range threshold. For example, a reduced amplitude range can be confined or limited within a portion of the VDR that can be provided by one or more ADCs comprising the first ADC. The method can include an analog-to-digital converter (ADC) of the receiver operating, during the listening mode, at the reduced power level. The ADC can operate at a reduced energy level by powering only the circuitry of the ADC corresponding to the amplitude range of the signal corresponding to the VDR operational during the listening mode (e.g., the portion of the VDR range remaining active while listening for the preambles). The reduced power level can correspond to the selected reduced amplitude range and can be established based on at least on one of a portion of an overall variable dynamic range of the ADC. For instance, while powering down portions of the ADC during the listening mode, the receiver can drop 1 bit of effective number of bits (ENOB) for each new gain step. For example, during the listening mode, the reduced amplitude range can correspond to an initial gain of the ADC of anywhere between 3-8 bits, such as 4 bits or 6 bits. The ADC can be configured to operate using a total of 8-12 or 12-16 bits. In some configurations, such as 12-bit ADC, only 4 out of 12 bits of the ADC can be utilized or powered during the listening mode. The remaining (e.g., unused) bits of the ADC can be powered down, resulting in energy saving of the ADC during the listening mode.

The method can include operating, during the listening operation mode, the frequency synthesis systems (e.g., PLL or LOGEN) at reduced power levels, such as power levels that are below their maximum operational power levels. During the listening mode, the method can include operating, by one or more phase-locked loops (PLL) and one or more local oscillator generators (LOGENs) of the receiver, at a first current level corresponding to a first noise level. The first current level can include a current level of the PLL that is lower than the current level of the PLL at the receiving mode. The first noise level can include a noise level that is greater than the noise level of the PLL or LOGEN at the receiving mode. For example, the PLL utilized for the listening mode can operate at a range of 1-5 dB, while the PLL for the receiving mode can operate at a range of 18-24 decibels (dBs).

The method can include adjusting, by an amplifier, such as a low noise amplifier (LNA) of the receiver, a supply voltage based on a selected amplitude range of the plurality of amplitude ranges. The LNA can operate at a first voltage level during the listening mode. The LNA can be operated at a portion of the supply voltage from the voltage level of the battery, such as a 1.8V from a 3.6V battery voltage. This voltage drop can result in the LNA saving energy during the listening mode. The LNA can conserve energy by amplifying the signal at a lower range or a portion of the range at which the LNA can amplify the signal.

The method can include adjusting, by a baseband processor of the receiver, a headroom voltage between a first voltage level to be used during the listening mode and a second voltage level to be used during the receiving mode. The baseband circuitry can select between a range of voltages for its operation, such as between 0.6V, 0.8V, 1.2V and 1.5V. These voltage selections or ranges can vary based on dynamic range selections (e.g., selections of amplitude ranges). For instance, the first voltage level of the listening mode can be lower than the second voltage level to conserve energy of the receiver during the listening mode.

The reduced amplitude range can correspond to first operating point of a variable dynamic range of the receiver. The one or more processors can be configured to select the first operating point based the reduced power level to conserve energy of the receiver during the listening mode. The receiver can include an automatic gain controller (AGC) to adjust at least one of the reduced amplitude range or the increased amplitude range based on one or more conditions of the wireless transmissions.

At 510, the method can receive the preamble of a data frame. The method can include the one or more processors of the receiver, receiving the preamble of the data frame during the operation at the reduced amplitude range. For instance, while operating with an ADC of a full set of bits, the receiver can detect the preamble using only a portion of the ADC bits (e.g., 4 bits out of 12-bit ADC). The one or more processors can detect that the preamble of a transmission has been received while operating at the reduced amplitude range. For instance, the one or more processors can determine that a plurality of bits received at the portion of the ADC operated during the listening mode corresponds to a preamble. In response to this determination, the one or more processors can activate the operating functions and the automatic gain controller to utilize, power or activate the remaining ADC bits (e.g., the bits not utilized during the listening mode) to switch to the receiving mode.

At 515, the method can switch to an increased amplitude range to receive the data frame in a receiving mode. The method can include switching, by the one or more processors for a receiving mode of the receiver and responsive to receiving the preamble of the data frame, to an increased amplitude range to receive the data frame. The increased amplitude range can operate at an increased power level above the power threshold. The switching can include configuration adjustments to any of the operating circuits of the receiver. For example, the ADC can switch to power or activate the bits of the ADC that were not powered during the listening mode (e.g., the 12-bit ADC that operated at 4 bits during the listening mode can now operate at full 12 bits). For example, the frequency synthesis systems (e.g., PLLs or LOGENs) can switch to operate at higher current levels and lower signal to noise ratios than was the case at the listening mode. For example, the amplifiers (e.g., eLNAs) can be switched to operate at a higher supply voltage than was the case during the listening mode (e.g., switched to 3.6V battery voltage from the 1.8V reduced supply voltage). For example, the baseband processors can switch to higher voltage settings (e.g., from 0.6V during the listening mode to 1.5V during the receiving mode).

The receiver can be configured to switch between the listening mode and the receiving mode within a predefined time window upon detecting the preamble. For example, the automatic gain controller can be configured to switch to the increased amplitude range of the VDR within a time window of up to 10, 15, 20, 30, 50, 100 or 150 microseconds, following the preamble, the preamble arrival or the preamble detection. In the examples in which multiple ADCs are used for multiple operation modes, the method can include switching, by the one or more processors for the receiving mode, to the increased amplitude range of a second ADC of the receiver. The second ADC can be used for the received operation mode and can have an increased amplitude range that exceeds the amplitude range threshold. The increased amplitude range of the second ADC can be greater than the reduced amplitude range of the first ADC. The number of bits (e.g., the resolution) of the second ADC can be greater (e.g., 10-16 bits) than the number of bits of the first ADC (e.g., 3-6) that can be used for the listening mode at 505.

The method can include operating, by one or more phase-locked loops (PLL) and one or more local oscillator generators (LOGENs) of the receiver, at a first current level corresponding to a first noise level during the listening mode and at a second current level corresponding to a second noise level during the receiving mode. The first current level can be lower than the second current level to conserve the energy. The first noise level can be higher than the second noise level. For example, a single PLL can operate at the first current level and the first noise level during the listening mode and then switch to a second current level and the second noise level during the receiving mode. For example, a first PLL can be configured to operate at the first current level and the first noise level and this first PLL can be designated for the listening mode, while a second PLL can be configured to operate that the second current level and the second noise level and can be designated to be used for the receiving mode.

The method can include adjusting, by a low noise amplifier (LNA) of the receiver, a supply voltage based on a selected amplitude range of the plurality of amplitude ranges. The LNA can operate at a first voltage level during the listening mode and at a second voltage level during the receiving mode. The first voltage level can be lower than the second voltage level. The increased amplitude range can be adjusted for a signal strength of the data frame based on one or more measurements of a signal of the preamble. The receiver can include an automatic gain controller (AGC) to adjust at least one of the reduced amplitude range or the increased amplitude range based on one or more conditions of the wireless transmissions. The AGC can coordinate operations of various operating circuits to make circuitry reconfigurations or adjustments (e.g., via ADC, PLL or LOGEN, eLNAs or baseband processors) to make the adjustment to reconfigure the receiver for the listening mode and the increased amplitude range at its suitable power level.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected includes indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure. The headings provided in this document are non-limiting.

## Claims

1. A system, comprising:
a receiver configured to receive wireless transmissions having a plurality of amplitude ranges at a plurality of corresponding power levels, the receiver comprising one or more processors configured to:
operate, for a listening mode of the receiver, at a reduced amplitude range of the plurality of amplitude ranges for which to listen for a preamble of a data frame of a wireless transmission, the reduced amplitude range corresponding to a reduced power level below a power threshold;
receive, while operating at the reduced amplitude range, the preamble of the data frame; and
switch, for a receiving mode of the receiver responsive to receiving the preamble of the data frame, to an increased amplitude range to receive the data frame, the increased amplitude range operating at an increased power level above the power threshold.

2. The system of claim 1, comprising the one or more processors configured to:
operate, for the listening mode, at the reduced amplitude range of a first analog to digital converter (ADC) of the receiver, the first ADC having a reduced amplitude range not exceeding an amplitude range threshold; and
switch, for the receiving mode, to the increased amplitude range of a second ADC of the receiver, the second ADC having an increased amplitude range that exceeding the amplitude range threshold.

3. The system of claims 1 or 2, wherein the receiver includes an analog-to-digital converter (ADC) configured to operate, during the listening mode, at the reduced power level, the reduced power level established based on at least on one of a portion of an overall variable dynamic range of the ADC,
and/or
wherein the receiver includes one or more phase-locked loops (PLL) and one or more local oscillator generators (LOGENs), the one or more PLLs and the one or more the LOGENs configured to operate at a first current level corresponding to a first noise level during the listening mode and at a second current level corresponding to a second noise level during the receiving mode, wherein the first current level is lower than the second current level to conserve the energy and the first noise level is higher than the second noise level.

4. The system of one of the previous claims, wherein the receiver includes a low noise amplifier (LNA) that is configured to adjust a supply voltage based on a selected amplitude range of the plurality of amplitude ranges, wherein the LNA operates at a first voltage level during the listening mode and at a second voltage level during the receiving mode, the first voltage level being lower than the second voltage level.

5. The system of one of the previous claims, further comprising a baseband processor configured to adjust a headroom voltage between a first voltage level to be used during the listening mode and a second voltage level to be used during the receiving mode, the first voltage level lower than the second voltage level to conserve energy of the receiver during the listening mode.

6. The system of one of the previous claims, wherein the reduced amplitude range corresponds to first operating point of a variable dynamic range of the receiver, the one or more processors configured to select the first operating point based the reduced power level to conserve energy of the receiver during the listening mode.

7. The system of one of the previous claims, wherein the increased amplitude range is adjusted for a signal strength of the data frame based on one or more measurements of a signal of the preamble.

8. The system of one of the previous claims, wherein the receiver includes an automatic gain controller (AGC) to adjust at least one of the reduced amplitude range or the increased amplitude range based on one or more conditions of the wireless transmissions
and/or
wherein the receiver is configured to switch between the listening mode and the receiving mode within a predefined time window upon detecting the preamble

9. The system of one of the previous claims, wherein the preamble and the data frame are part of a communication protocol comprising at least one of a Wi-Fi technology, a Bluetooth technology or a Zigbee technology
and/or
wherein the one or more processors are configured to adjust the increased power level based on historical data of signal strength for a plurality of data frames received by the receiver.

10. A method, comprising:
operating, by one or more processors for a listening mode of a receiver configured to receive wireless transmissions having a plurality of amplitude ranges at a plurality of corresponding power levels, at a reduced amplitude range of the plurality of amplitude ranges for which to listen for a preamble of a data frame of a wireless transmission, the reduced amplitude range corresponding to a reduced power level below a power threshold;
receiving, by the one or more processors while operating at the reduced amplitude range, the preamble of the data frame; and
switching, by the one or more processors for a receiving mode of the receiver responsive to receiving the preamble of the data frame, to an increased amplitude range to receive the data frame, the increased amplitude range operating at an increased power level above the power threshold.

11. The method of claim 10, comprising:
operating, by the one or more processors for the listening mode, at the reduced amplitude range of a first analog to digital converter (ADC) of the receiver, the first ADC having a reduced amplitude range not exceeding an amplitude range threshold; and
switching, by the one or more processors for the receiving mode, to the increased amplitude range of a second ADC of the receiver, the second ADC having an increased amplitude range that exceeding the amplitude range threshold.

12. The method of claims 10 or 11, comprising:
operating, by an analog-to-digital converter (ADC) of the receiver, during the listening mode, at the reduced power level, the reduced power level established based on at least on one of a portion of an overall variable dynamic range of the ADC
and/or
operating, by one or more phase-locked loops (PLL) and one or more local oscillator generators (LOGENs) of the receiver, at a first current level corresponding to a first noise level during the listening mode and at a second current level corresponding to a second noise level during the receiving mode, wherein the first current level is lower than the second current level to conserve the energy and the first noise level is higher than the second noise level.

13. The method of one of claims 10 to 12, comprising:
adjusting, by a low noise amplifier (LNA) of the receiver, a supply voltage based on a selected amplitude range of the plurality of amplitude ranges, wherein the LNA operates at a first voltage level during the listening mode and at a second voltage level during the receiving mode, the first voltage level being lower than the second voltage level
and/or
adjusting, by a baseband processor of the receiver, a headroom voltage between a first voltage level to be used during the listening mode and a second voltage level to be used during the receiving mode, the first voltage level lower than the second voltage level to conserve energy of the receiver during the listening mode.

14. The method of one of claims 10 to 13, wherein the reduced amplitude range corresponds to first operating point of a variable dynamic range of the receiver, the one or more processors configured to select the first operating point based the reduced power level to conserve energy of the receiver during the listening mode.

15. A non-transitory computer-readable medium storing instructions that, when executed by at least one processor of a receiver configured to receive wireless transmissions having a plurality of amplitude ranges at a plurality of corresponding power levels, cause the at least one processor to:
operate, for a listening mode of the receiver, at a reduced amplitude range of the plurality of amplitude ranges for which to listen for a preamble of a data frame of a wireless transmission, the reduced amplitude range corresponding to a reduced power level below a power threshold;
receive, while operating at the reduced amplitude range, the preamble of the data frame; and
switch, for a receiving mode of the receiver responsive to receiving the preamble of the data frame, to an increased amplitude range to receive the data frame, the increased amplitude range operating at an increased power level above the power threshold.
